# EUROPEAN PATENT APPLICATION

(11) **EP 1 145 991 A2**
(43) Date of publication of application: **17.10.2001**
(21) Application number: 01870079.9
(22) Date of filing: 12.04.2001
(51) Int. Cl.: B65F 1/00, B65F 9/00

(54) **Recycling depot**

(30) Priority: 12.04.2000 BE 200000260
(71) Applicant: Nuyts, Ludo, 2360 Oud-Turnhout (BE)
(72) Inventor: Nuyts, Ludo, 2360 Oud-Turnhout (BE)

(57) **Abstract**

A recycling depot 1 for delivering seperated waste, equiped with several waste bin/containers 2, like rollon-off containers for trucks, for storage of different types of waste, with the characteristic that there is an infrastructure 8 present which provides a certain place for the present waste bin/containers 2, on the one hand well approachable for their 2 manipulation and transport and on the other hand well approachable for the waste that has to be disposed, where these infrastructure 8 further provides in at least one buffer bin 3 in which a waste unit 6 can be dumped in, and further provides a mechanised transporting system 5 which can transport the individual contents of each present buffer bin 3 by means of a transport holder 4 to a chosable waste bin/container 2 from above mentioned present waste bin/containers 2 and can empty it herein.

## Description

Recycling depots where seperated waste can be taken to or can be put in waste bins/containers are known to the public. These waste bins, mostly rollon-off containers or skip containers are placed on a manner that the waste can be put in easyly.

Because of the increasing costs of waste disposal and the environmental concern, necessity forces on to inspect and weigh the waste before it is disposed in the waste bins/containers.

Weighing then takes place over balances and weighbridges by entering and leaving the recycling depot.
This way of waste controling is very extensive and hard to verify and takes too many people in the system.
Other disadvantages are also, aspects as:
- public health, because of the possible danger for contamination by too close contact with heaping up garbage
- danger situations for present people especially for children with the coming and going and manoeuvring of cars and vans with or without trailers, also when placing or removing the waste containers by trucks.
- Because of the very busy traffic passage flows during the limited opening houres of the recycling depot, there have to be placed a lot of waste bins/containers. A recycling depot needs a lot of space and is therefore mostly a very expensive investment for the exploitation of the recycling depot. Also the environmental disturbance effect of the area planning will be proportional to the size of the recycling depot.

The invention offers here a solution by putting on a transporting system between the place of delivery of the waste and the dumping in the right waste bin/containers.
The invention offers the possibility to achieve a logistic, well checkable, efficient and ergonomical cycle with only few people in the system.

On well approachable and safe drive-in provisions, the waste deliverer dump waste in 1 or more buffer bins which offer the possibility to inspect, to weigh and to record the delivered waste or waste unit.

A mechanized tranporting system, robotised or not. takes the waste unit to a container of the concerning type of waste. The transport holder with which the waste is transported can be a buffer bin itself or can be charged mechanically with an above mentioned buffer bin.

There can be 1 or more buffer bin on a recycling depot, depending on the intensity of use.
One transporting system can treat the different buffer bins.
Safety means like sliding doors, dividing walls, safety detectors etc. can always be put into practice during the treatment of the buffer bin(s), for safety of the deliverers and the operators of the system.

The transporting system can be made using different known systems like gantry cranes or travelling cranes with the necessary grip elements or techniques for gripping and treating the transportholders.

Further the invention provides the possibility that:
- there is a control centre present
- the system is partly or completely automatic
- the waste is checked with camera's and other detectors
- the automatic payment is done with the waste deliverer
- credit cards can be accepted
- the transporting system detects the contents or weight of the containers and reports it to the control centre
- the transport holders are buffered between filling and emptying by the transporting system
- identification of the waste unit and data storage takes place together with the weighing data, type of waste, price, identification of the deliverer, licence plate and the waste bin/container in which the waste is put in, etc...
- after placement, the waste bin/containers will be identified for a certain type of waste and will be situated for computerization.
- a cycle of a.o. can be accomplished:
   - dumping waste in a buffer bin
   - identification, weighing, inspection and payment
   - transportation of the waste unit to the waste bin/container for that certain type of waste

### Description in detail:

A recycling depot (1) for delivering seperated waste, equiped with several waste bins/containers (2), like skip containers or rollon-off containers for trucks, for storage of different types of waste, in which the invention provides that there is an infrastructure (8) present which provides a certain place for the present waste bin/containers (2), on the one hand well approachable for their (2) manipulation and transport and on the other hand well approachable for the waste that has to be disposed, where these infrastructure (8) further provides in at least one buffer bin (3) in which a waste unit (6) can be dumped in, and further provides a mechanised transporting system (5) which can transport the individual contents of each present buffer bin (3) by means of a transport holder (4) to a chosable waste bin/container (2) from above mentioned present waste bin/containers (2) and can empty it herein.

Further provides the invention that above mentioned infrastructure (8), during the transportation of the waste unit (6) between the deliverer and the chosen waste bin/container (2), provides a weighing system (9) for weighing the waste units (6), and/or this infrastructure (8) during transportation of the waste unit (6) between the deliverer and the chosen waste bin/container (2) provides in an inspection system (10) for inspection of the waste units (6), and further that the waste unit (6) will be weighed in a buffer bin (3), and/or that the waste unit (6) can be inspected in above mentioned buffer bin (3).

Further the invention can provide that the waste unit (6) will be weighed in a transport holder (4), and that the waste unit (6) can be inspected in this transport holder (4). The invention can also provide that a buffer bin (3) is used as a buffer space in which the contents stays temperarily to dump it later in a transport holder (4), even so that the buffer bin (3) is a transport holder (4), but also that the buffer bin (3) and/or the transport holder (4) can be set up weighable and/or inspectable.

Further the invention can also provide that the transport holder (4) is fixed to the transporting system (5) and further also that the transport holder (4) is seperated from the transporting system (5) and can be gripped, picked up, transported, emptied and put down by the transporting system (5).

Further the invention can provide that the transporting system (5) is at least partly computerized and further that the transporting system (5) is at least partly robotised.
The invention provides further in the possibility that the transporting system (5) a technique is where the transport holder (4) can be moved at least two-dimensional or three-dimensional.

Further provides the invention in the possibility that the transporting system (5) is equiped with a volume-detector for volume-detection when filling up the waste bin/container (5).

Further the invention can provide that there is a datafile present for adding up the weights of the treated waste units (6) per waste bin/container (5), and further that there is at least one volume-meter present for measering the volume of the dumped waste in the waste bin/containers (5), where there can also be detection means present which can indicate when a waste bin/container (2) is sufficiently filled up to be carried away.

Further the invention provides the possibility that the moving parts of the transporting system (5) move on rails which are placed in a higher position than the waste bin/containers (2), or that the moving parts of the transporting system (5) move on rails placed on the floor. The invention can also provide that the transporting system (5) can be a gentry crane or a travelling crane.

Further offers the invention the possibility that a waste unit (6) can be identified and further that data storage of the waste unit (6), the deliverer, the type of waste, the weight, the date en time and the used waste bin/container (2) also possible the price of the waste, can take place.

Further the invention can offer the possibility that several buffer bins are present and even that there is a safety equipment present when there is no buffer bin or during treatment of the buffer bin and that there is an indication of the weight even that the indication of the weight is shown on a screen during and/or after filling up the buffer bin (3).

Further the invention provides the possibility that the system is provided with a control centre (7) and that the control centre (7) has a view over the delivered waste units (6) in present buffer bins (3) with the possibility that the control centre (7) gives the impuls for acceptation of the waste unit (6) so that the transportation of the waste unit (6) can take place.

The invention provides in a cycle of following actions:
1) delivery of waste unit (6) in a buffer bin (3)
2) gives a signal when delivery is completed or when the buffer bin is filled up(3)
3) weighing and registration of the weight
4) transportation of the waste unit (6) in a buffer bin (3) with the transport holder (4) to a chosen waste bin/container (2)

The invention provides in a cycle of following actions:
1) delivery of waste unit (6) in a buffer bin (3) which is also transportholder (4)
2) gives a signal when delivery is completed or when the buffer bin is filled up (3)
3) weighing and registration of the weight
4) transportation of the waste unit (6) with the transport holder (4) to a chosen waste bin/container (2)

The invention provides in a cycle of following actions:
1) delivery of waste unit (6) in a buffer bin (3)
2) gives a signal when delivery is completed or when the buffer bin is filled up (3)
3) weighing and registration of the weight
4) mechanical transportation of the waste unit (6) of the buffer bin (3) to the transport holder (4)
5) transportation of the waste unit (6) to a chosen waste bin/container (2) by means of the transport holder (4)

Further provides the invention that transportation in above mentioned cycles of the waste unit (6) to a chosen waste bin/container (2) by means of a transport holder (4) can be postponed once or more untill there is a minimum put-in weight of waste (6) in a buffer bin (3). In this case the weight of the individual delivered waste will be calculated as gross - tare = net.

Further provides the invention in the possibility that after delivery of the waste by the deliverer, an impuls has to be given by the control centre for acception of the waste unit (6), before the cycle can continue.

Furthermore the invention can provide that there will be an automatic calculation of the price of the waste and the making of a calculation file can take place as also an automatic payment of the price of the waste by means of a credit card which can be inserted in the system.

Further the invention provides the possibility that above mentioned infrastructure (8) provides the buffering of the transport holders (4) before being treated by the transporting system, and that this transporting system (5) is equiped with an emptying system (11).

Further provides the invention that this transport holder (4) is equiped with an emptying system (11).

Furtheron the invention provides that this infrastructure (8) provides in at least one good passage way for vehicles of deliverers till close to the present buffer bins (3).

Further provides the invention that this infrastructure (8) can be provided with one weighing base (12) per waste bin/container (2) on which the empty waste bin (container) (2) is placed and the total present weight of the already delivered waste (6) is shown permanently.

Furthermore the invention provides that this infrastructure (8) can be provided with I weighing base (12) per waste bin/container (2) on which the empty waste bin (container) (2) is placed and the total weight of already disposed waste (6) is compared permanently or periodical with the sum of the weights, registered by the weighing system(s) (9) of the buffer bin(s) (3).

### Legend by drawing:

- 1: recycling depot
- 2: waste bin/container
- 3: buffer bin
- 4: transport holder
- 5: transporting system
- 6: waste unit
- 7: control centre
- 8: infrastructure
- 9: weighing system
- 10: inspection system
- 11: emptying system
- 12: weighing base

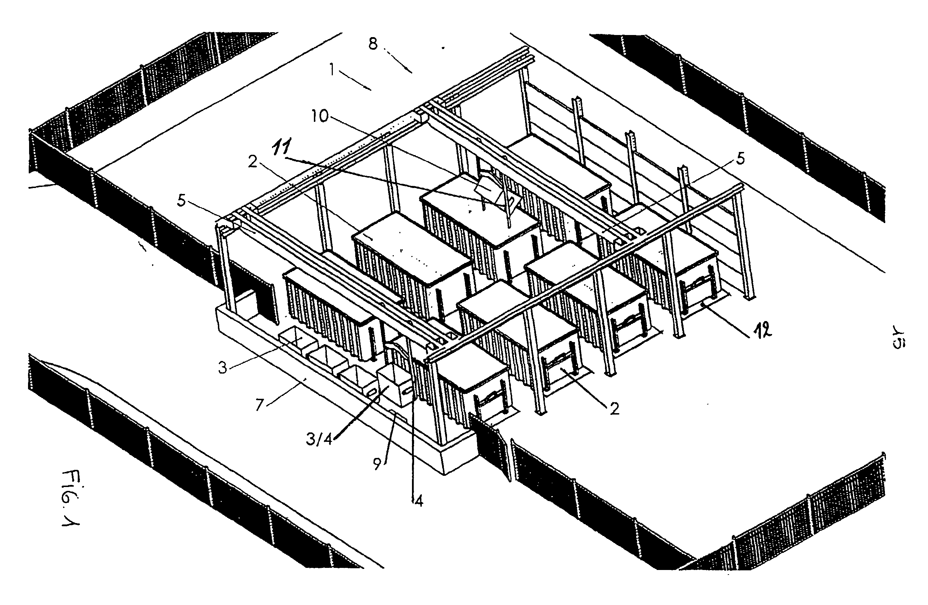

Fig. 1 shows an exemple of an infrastructure.
The transporting system uses a gentry crane, to be clear it is drawn here in two positions.
The control centre is missing but one can assume that the checking can be done here from the quay near the buffer bins.

## Claims

1. A recycling depot (1) for delivering seperated waste, equiped with several waste bins/containers (2), like skip containers and/or rollon-off containers for trucks, for storage of different types of waste, with the characteristic that there is an infrastructure (8) present which provides a certain place for the present waste bin/containers (2). on the one hand well approachable for their (2) manipulation and transport and on the other hand well approachable for the waste that has to be disposed, where these infrastructure (8) further provides in at least one buffer bin (3) in which a waste unit (6) can be dumped in, and further provides a mechanised transporting system (5) which can transport the individual contents of each present buffer bin (3) by means of a transport holder (4) to a chosable waste bin/container (2) from above mentioned present waste bin/containers (2) and can empty it herein.

2. Invention according to conclusion 1, with the characteristic that above mentioned infrastructure (8). during the transportation of the waste unit (6) between the deliverer and the chosen waste bin/container (2), provides in a weighing system (9) for weighing the waste units (6).

3. Invention according to conclusion 1, with the characteristic that this infrastructure (8) during transportation of the waste unit (6) between the deliverer and the chosen waste bin/container (2) provides in an inspection system (10) for inspection of the waste units (6).

4. Invention according to an association between one or more previous conclusions, with the characteristic that the waste unit (6) will be weighed in mentioned buffer bin (3).

5. Invention according to an association between one or more previous conclusions, with the characteristic that the waste unit (6) can be inspected in above mentioned buffer bin (3).

6. Invention according to an association between one or more previous conclusions, with the characteristic that the waste unit (6) will be weighed in a mentioned transport holder (4).

7. Invention according to an association between one or more previous conclusions, with the characteristic that the waste unit (6) can be inspected in a mentioned transport holder (4).

8. Invention according to an association between one or more previous conclusions, with the characteristic that a buffer bin (3) is a buffer space in which the contents temperarily stays to dump it later in a transport holder (4).

9. Invention according to an association between one or more previous conclusions, with the characteristic that the transport holder (4) is seperated from the transporting system (5) and can be gripped, picked up. transported, emptied and put down by the transporting system (5).

10. Invention according to an association between one or more previous conclusions. with the characteristic that the transporting system (5) is at least partly computerized.

11. Invention according to an association between one or more previous conclusions, with the characteristic that the transporting system (5) is at least partly robotised.

12. Invention according to an association between one or more previous conclusions, with the characteristic that the transporting system (5) is a technique in which the transport holder (4) can be moved at least two-dimensional.

13. Invention according to an association between one or more previous conclusions, with the characteristic that the transporting system (5) is equiped with a volume-detector for volume-detection when filling up the waste bin/container (5).

14. Invention according to an association between one or more previous conclusions, with the characteristic that there is a datafile present for adding up the weights of the treated waste units (6) per waste bin/container (5).

15. Invention according to an association between one or more previous conclusions, with the characteristic that one or more waste bin/containers (2) are positioned on an individual weighing base (12) and that the permanently weighed amount of waste which is in the waste bin/container, is compared permanently or periodically to the sum of weights, registered by the weighing system(s) (9) of the buffer bin(s) (3).

16. Invention according to an association between one or more previous conclusions, with the characteristic that there are detection means present which can indicate when a waste bin/container (2) is sufficiently filled up to be carried away.

17. Invention according to an association between one or more previous conclusions, with the characteristic that the moving parts of the transporting system (5) move on rails which are placed in a higher position than the waste bin/containers (2).

18. Invention according to an association between one or more previous conclusions, with the characteristic that the moving parts of the transporting system (5) move on rails which are placed on the floor.

19. Invention according to an association between one or more previous conclusions, with the characteristic that a waste unit (6) can be identified and registered.

20. Invention according to an association between one or more previous conclusions, with the characteristic that data storage of the waste unit (6), the deliverer, the type of waste, the weight, the date en time and the used waste bin/container (2) also possible the price of the waste, can take place.

21. Invention according to an association between one or more previous conclusions, with the characteristic that mentioned infrastructure (8) is equiped for the buffering of the transport holders (4) before being treated by the transporting system (5).

22. Invention according to an association between one or more previous conclusions, with the characteristic that mentioned transporting system (5) is epuiped with an emptying system (11).

23. Invention according to an association between one or more previous conclusions, with the characteristic that mentioned transport holder (4) is equiped with an emptying system (11).
